# EUROPÄISCHE PATENTSCHRIFT

(11) **EP 2 730 170 B1**
(45) Veröffentlichungstag und Bekanntmachung des Hinweises auf die Patenterteilung: **10.02.2016**
(21) Anmeldenummer: 12192448.4
(22) Anmeldetag: 13.11.2012
(51) Int. Cl.: A23C 9/142, A23C 9/152, A23C 9/15, A23J 3/34, A23C 21/02

(54) **Allergenfreie Nahrungsmittelzusammensetzungen**
Food compositions free of allergens
Compositions aliments libre d'allergènes

(43) Veröffentlichungstag der Anmeldung: 14.05.2014
(73) Patentinhaber: DMK Deutsches Milchkontor GmbH, 27404 Zeven (DE)
(72) Erfinder: Döring, Sven-Rainer, 27404 Zeven (DE)
(74) Vertreter: Fabry, Bernd

(56) Entgegenhaltungen:
- WO-A1-96/08155
- DE-A1- 19 953 979
- GB-A- 2 043 651
- US-A- 5 039 532
- US-A1- 2011 097 442

## Beschreibung

### Gebiet der Erfindung

Die Erfindung befindet sich auf dem Gebiet der Milchprodukte und betrifft allergenfreie Nahrungsmittelzubereitungen auf Basis von Milchproteinhydrolysaten sowie ein Verfahren zu deren Herstellung.

### Stand der Technik

Allergien gegen Kuhmilch und Milchprodukte, die speziell an die Bedürfnisse von Kleinkindern angepasst sind, sind im Wesentlichen darauf zurückzuführen, dass sich die aus dem Milchserum bzw. der Molke stammenden Eiweißstoffe von denen der Muttermilch unterscheiden und Allergene darstellen können. Unter diesen sind als Hauptallergene das alpha-Laktalbumin (aLA), das beta-Laktalbumin (bLG) sowie in untergeordnetem Maße auch die Immunglobuline (insbesondere das IgG) sowie das Serumalbumin (BSA) zu nennen.

Zur Herstellung allergenarmer Milchprodukte sind dem Stand der Technik zahlreiche Verfahren zu entnehmen. Üblicherweise wird von Süßmolke ausgegangen, die man aus Käserei- oder Kesselmilch durch Dicklegung unter Zugabe von Lab erhält. Die Süßmolke wird durch Ultrafiltration in ein Molkeproteinkonzentrat überführt, welches dann mit einer Endopeptidase, vorzugsweise Trypsin hydrolysiert wird, wie dies beispielsweise in der EP 0226221 B1 beschrieben wird. Verfahren zur Herstellung von Molkeproteinhydrolysaten, die als letzten Schritt eine Ultrafiltration vorsehen, sind beispielsweise auch aus den Druckschriften GB 2043651 A oder WO 1987 003785 A1 (Samuelsson) geläufig.

Die Hydrolyse kann auch in mehreren Stufen durchgeführt werden, wobei diese durch eine thermische Behandlung voneinander getrennt sind, um noch vorhandene Proteine zu denaturieren und der Hydrolyse leichter zugänglich zu machen. Ein solches Verfahren wird beispielsweise in **der** EP 0322589 B1 (Nestle) beschrieben.

Zur Herstellung eines Molkeproteinhydrolysats, das keine Peptide mit Molekulargewichten oberhalb von 5.000 Dalton enthält, wird in der EP 0353122 A1 der Einsatz einer Enzymmischung aus Trypsin und Chymotrypsin empfohlen. Nach der Hydrolyse schließt sich auch hier eine Ultra- bzw. Diafiltration an.

Aus der internationalen Patentanmeldung WO 1993 004593 A1 (TEAGASC) ist ein Verfahren zur Herstellung hyperallergener Molkeproteinhydrolysate bekannt, bei dem man ein Substrat einer Hydrolyse mit einem proteolytischen Enzym unterwirft, das Enzym anschließend thermisch deaktiviert und das resultierende Produkt durch Mikrofiltration von nicht abgebauten Makropeptiden, die eine allergene Wirkung haben können, befreit.

Des Weiteren sei auf das russische Patent RU 2311039 C2 hingewiesen, aus dem ebenfalls Produkte für die Säuglingsernährung bekannt sind. Diese enthalten Milchproteine und Milchproteinhydrolysate, in deren Herstellprozess ebenfalls Ultrafiltrationsschritte stattfinden.

Die Verwendung der Süßmolke, wie dies der Stand der Technik ausschließlich beschreibt, hat indes erhebliche Nachteile in Bezug auf das verbleibende Allergiepotential der Endprodukte und die Aminosäurezusammensetzung, die in der Regel diätischen Ansprüchen aus folgenden Gründen nicht genügt. Käsereimilch enthält Micellen, in denen Casein über Calciumionen verbrückt vorliegt. Die Micellen tragen eine starke positive Ladung und stoßen sich gegenseitig ab, was eine Koagulation des Caseins verhindert. Zur Dicklegung wird die Käsereimilch daher mit dem Enzym Lab versetzt. Dieses trennt die Micellen auf und reduziert dabei deren Oberflächenlagerung, so dass das Casein koaguliert und zur Herstellung von Käse oder Quark abgetrennt werden kann. Zurück bleibt die Süßmolke, die nun auch noch das Lab, speziell das para-kappa-Casein (PKC) enthält. Dessen Aminosäuren werden somit Bestandteil der Aminosäurenmischung, die aus den Molkeproteinen stammen. Allerdings weisen die Proteine des PKC weitaus weniger essentielle Aminosäuren auf als die Molkenproteine, so dass diese wichtige Kennzahl in unerwünschter Weise erniedrigt wird.

Der Zusatz von Lab zur Käsereimilich führt zudem dazu, dass auch ein Teil der Molkenproteine gespalten wird. Diese Spaltung ist unspezifisch und nicht zu kontrollieren, so dass eine Standardisierung der Aminosäurenverteilung beim Einsatz von Süßmolke problematisch ist.

Ein weiteres Problem besteht darin, dass die Kesselmilch zur Herstellung eines bestimmten Käsetypen sowohl im Fett als auch im Eiweißgehalt eingestellt wird. Beim Anschneiden, d.h. beim Herstellen des Käsebruchs) der Käsegallerte im Käsefertiger kommt es an den Schnittstellen zum Austritt von Fett. Dieser Fettanteil geht in die Molke über. Ein Großteil dieses Fettes sind freie Fettsäuren die auch durch eine nachgeschaltete Entrahmungszentrifuge nicht mehr abgetrennt werden können, da es sich um freie Fettsäuren handelt. Dies ist aus diätischen Gründen unerwünscht.

Ein weiteres Problem, das aus dem Stand der Technik bekannt ist, besteht in der mangelhaften Geschmacksqualität der Hydrolysate. Diese ist eng mit dem Hydrolysegrad und der resultierenden Aminosäureverteilung in den Peptiden verbunden. Insbesondere Peptide mit hohem Anteil an hydrophoben Aminosäuren (z.B. Phe, Pro, Val, Trp, Leu oder Ile) führen zu einem bitteren Geschmack. Bei niedrigen Hydrolysegraden sind diese Peptide infolge ihrer Faltung für die Geschmacksrezeptoren nicht zugänglich. Bei höheren Hydrolysegraden kommt es indes dazu, dass sich die Peptide auffalten und dann mit den Rezeptoren in Wechselwirkung treten können.

Um einen Bittergeschmack zu verhindern, ist es daher bislang erforderlich, geeignete Enzyme und Verfahrensbedingungen nach dem Prinzip von Versuch und Irrtum so auszuwählen, dass im Ergebnis ein Bittergeschmack vermieden wird. Dies ist jedoch mit hohem experimentellem Aufwand verbunden. So kann es z.B. sein, dass ein Verfahren sich zwar technisch einfacher bei niedrigeren Temperaturen durchführen ließe, aber vor der Umsetzung erst einmal ein neues Enzymsystem gefunden werden müsste, was im Zweifelsfall zu aufwendig wäre. Es liegt auf der Hand, dass ein Bedarf an einem Verfahren besteht, das in diesem Punkt eine höhere Flexibilität zulässt.

Die erste Aufgabe der Erfindung hat somit darin bestanden, Nahrungsmittel auf Basis von Molkeproteinhydrolysaten speziell für die Ernährung von Kleinkindern zur Verfügung zu stellen, jedoch gleichzeitig allergenfrei sind, eine in Bezug auf eine diätische Ernährung verbesserte Aminosäurezusammensetzung aufweisen und dabei frei von Fetten sind. Des Weiteren sollte das Verfahren so ausgestaltet sein, dass sich Aminosäureverteilungen frei von bitterem Geschmack weitgehend unabhängig von der Natur der verwendeten proteolytischen Enzyme einstellen, so dass sich der technische Aufwand im Verlauf einer Änderung der einzelnen Verfahrensbedingungen speziell in der Hydrolyse vereinfacht.

### Beschreibung der Erfindung

Gegenstand der Erfindung sind allergenfreie Nahrungsmittelzubereitungen mit verbesserter Aminosäurezusammensetzung, die dadurch erhältlich sind, dass man
(a) Rohmilch in an sich bekannter Weise erhitzt, von Feststoffen befreit und den Rahm abtrennt,
(b) die so erhaltene Magermilch einer Mikrofiltration unterwirft,
(c) die als erstes Permeat resultierende Edelmolke einer Ultrafiltration unterwirft,
(d) das resultierende zweite Retentat auf eine Trockenmasse von 25 bis 50 Gew.-% aufkonzentriert,
(e) das resultierende Molkenproteinkonzentrat mindestens einer Hydrolyse in Gegenwart mindestens eines proteolytischen Enzyms unterwirft,
(f) das resultierende Hydrolysat einer Wärmebehandlung unterwirft und schließlich
(g) das Endprodukt von Wasser befreit.

Ein zweiter Gegenstand der Erfindung betrifft ein Verfahren zur Herstellung allergenfreier Nahrungsmittelzubereitungen mit verbesserter Aminosäurezusammensetzung, bei dem man
(a) Rohmilch in an sich bekannter Weise erhitzt, von Feststoffen befreit und den Rahm abtrennt,
(b) die so erhaltene Magermilch einer Mikrofiltration unterwirft,
(c) die als erstes Permeat resultierende Edelmolke einer Ultrafiltration unterwirft,
(d) das resultierende zweite Retentat auf eine Trockenmasse von 30 bis 50 Gew.-% aufkonzentriert,
(e) das resultierende Molkenproteinkonzentrat mindestens einer Hydrolyse in Gegenwart mindestens eines proteolytischen Enzyms unterwirft,
(f) das resultierende Hydrolysat einer Wärmebehandlung unterwirft und schließlich
(g) das Endprodukt von Wasser befreit.

Überraschenderweise wurde gefunden, dass sich durch die Verwendung von Edelmolke anstelle von Süßmolke die erfindungsgemäße Aufgabe vollumfänglich lösen lässt. Während im Zuge der Herstellung von Süßmolke Säuerungskulturen und Lab zur Dicklegung der Kesselmilch eingesetzt werden, sind dies genau Verfahrensschritte, die bei Verwendung von Edelmolke nicht durchlaufen werden. Insbesondere wird verhindert, dass Glycomakroproteine - die sonst durch das Lab vom Casein abgespalten werden - in die Molke übergehen und die Aminosäurezusammensetzung nachteilig verändern. Tatsächlich führt der Einsatz von Edelmolke zu Nahrungsmittelzubereitungen, deren Gehalt an essentiellen Aminosäuren im Durchschnitt etwa 3 bis 8 Gew.-% oberhalb des Wertes liegt, der unter Verwendung von Süßmolke erzielt wird. Durch den Schritt der Mikrofiltration sind die Produkte vollkommen fettfrei. Ein weiterer Vorteil besteht darin, dass die Aminosäurezusammensetzungen geschmacklich einwandfrei sind, so dass es auf die Natur der eingesetzten proteolytischen Enzyme nur noch untergeordnet ankommt.

### Herstellung der Magermilch

Zur Herstellung der Magermilch erfolgt zunächst eine Abtrennung von Feststoffen ("Käsestaub") sowie die Entrahmung des Fettanteils von etwa 4 Gew.-% aus der Rohmilch. Dies findet üblicherweise in einem speziellen Bauteil, vorzugsweise einem Separator statt. Derartige Bauteile sind aus dem Stand der Technik hinreichend bekannt. In der Milchindustrie sehr verbreitet sind Separatoren der Firma GEA Westfalia Separator GmbH, mit denen die beiden Schritte einzeln oder gemeinsam durchgeführt werden können (http://www.westfalia-separator.com/de/anwendungen/molkereitechnik/milch-molke.html). Entsprechende Bauteile sind beispielsweise auch in der DE 10036085 C1 (Westfalia) beschrieben und dem Fachmann bestens bekannt, so dass es zur Durchführung dieser Verfahrensschritte keiner Erläuterungen bedarf, da sie den allgemeinen Fachwissen zuzurechnen sind.

Die Wärmebehandlung der Rohmilch erfolgt vorzugsweise in Wärmeaustauschern, wobei sich speziell Plattenwärmeaustauscher als besonders geeignet erwiesen haben. An den Wärmeaustauschern liegt ein Temperaturgradient an, der jedoch so gewählt ist, dass die Rohmilch für eine Verweilzeit von mindestens 20 und höchstens 60 Sekunden, vorzugsweise etwa 30 Sekunden auf eine Temperatur von etwa 70 bis 80 °C und insbesondere etwa 72 bis 74 °C erhitzt wird.

### Mikrofiltration und Ultrafiltration

Die Mikrofiltration ist ein Verfahren zur Stoffabtrennung. Der wesentliche Unterschied zwischen der Mikro- und der Ultrafiltration liegt in den verschiedenen Porengrößen und in der unterschiedlichen Membranstruktur wie den Werkstoffen und den beteiligten Filtermaterialien. Eine Filtration durch Membranen mit einer Porengröße < 0,1 µm wird in der Regel Ultrafiltration genannt, während die Filtration bei Porengrößen > 0,1 µm gewöhnlich als Mikrofiltration bezeichnet wird. In beiden Fällen handelt es sich um rein physikalische, d.h. mechanische Membrantrennverfahren, die nach Prinzip des mechanischen Größenausschlusses arbeiten: alle Partikel in den Fluiden, die größer als die Membranporen sind, werden von der Membran zurückgehalten. Treibende Kraft in beiden Trennverfahren ist der Differenzdruck zwischen Zulauf und Ablauf der Filterfläche, der zwischen 0,1 und 10 bar liegt. Der Werkstoff der Filterfläche kann je Einsatzgebiet aus Edelstahl, Kunststoff, Keramik oder textilen Gewebe bestehen. Es gibt verschiedene Erscheinungsformen der Filterelemente: Kerzenfilter, Flachmembranen, Spiralwickelmembranen, Taschenfilter und Hohlfasermodule, die im Sinne der vorliegenden Erfindung alle grundsätzlich geeignet sind. Die Mikrofiltration erfolgt vorzugsweise mit Membranen, die einen Porendurchmesser von etwa 0,1 bis etwa 1,4 µm und vorzugsweise etwa 0,1 bis 0,2 µm aufweisen. Bei dieser Porengröße kann bei einer Warmfiltration im Bereich von etwa 50 bis 55 °C eine saubere Trennung in Casein (Retentat) und Molkenproteine (Permeat) erfolgen. Bei dieser Porengröße können thermophile Keime auch nicht mehr die Membran durchwachsen. Erfindungsgemäß wird die als Permeat bei der Mikrofiltration anfallende Edelmolke dann einer Ultrafiltration unterworfen, um das enthaltene Eiweiß aufzukonzentrieren und Lactose abzutrennen. Dies erfolgt grundsätzlich in der schon eingangs beschriebenen Weise, speziell bei Temperaturen im Bereich von etwa 10 bis etwa 55, vorzugsweise 10 bis 20 °C wobei die Membranen jedoch vorzugsweise einen Porendurchmesser im Bereich von etwa 1.000 bis etwa 50.000 und vorzugsweise etwa 5.000 bis etwa25.000 Dalton besitzen. Vorzugsweise handelt es sich um sogenannte Spiralwickelmembrane oder Platte-Rahmen-Module aus Polysulfon oder Polyethylenmembranen.

### Hydrolyse und Temperaturbehandlung

Während man das Permeat aus der Ultrafiltration anders weiter verwendet oder verwirft, wird das Retentat zunächst schonend auf eine Trockenmasse von etwa 30 bis etwa 50 Gew.-%, vorzugsweise etwa 40 Gew.-% aufkonzentriert und anschließend einer enzymatischen Hydrolyse mit mindestens einem proteolytischen Enzymen unterworfen. Diese Enzyme können im Gemisch vorliegen, gereinigt sein, und ihr Aktivitätsmaximum im basischen wie im neutralen Bereich aufweisen. Speziell kann es sich dabei um Endopeptidasen wie Trypsin, Chymotrypsin oder Pankreatin handeln. Es kommen aber auch Enzyme vom Typ des Papains in Frage.

Eine bevorzugte Enzymmischung stellt beispielsweise das Produkt "Pancreatic Trypsin" dar, das von Novo Industrie A/S im Markt erhältlich ist. Die Enzymmischung ist deswegen von Vorteil, da sie die Erzielung des gewünschten Hydrolysegrades erlaubt und zu einer vorteilhaften Molekulargewichtsverteilung der Peptide führt. Im Hinblick auf die Molekulargewichtsverteilung ist es nämlich vorteilhaft etwa 8 bis etwa 15 Gew.-% des Gesamtanteils an Peptiden im Bereich von 5.000 bis 50.000 Dalton zu haben, da dies die Emulsionsstabilität in den Endprodukten begünstigt.

Vorzugsweise erfolgt die Hydrolyse bei einer Temperatur von etwa 50 bis etwa 90 °C und über einen Zeitraum von etwa 10 Minuten bis hin zu 24 Stunden, vorzugsweise etwa 15 bis 60 Minuten, bei einem pH-Wert von etwa 6 bis 8. Wie in der Chemie üblich, sind Reaktionszeit und Temperatur über die RGT-Regel miteinander verknüpft, d.h. höhere Temperaturen machen kürzere Hydrolysezeiten möglich und umgekehrt.

Als Reaktionsgefäße kommen beispielsweise Rührkessel oder Rohrreaktoren in Frage.

Um zu vermeiden, dass das Molkeproteinkonzentrat koaguliert, kann man diesem einen Komplexbildner, wie z.B. Calcium- oder Magnesiumcitrat zusetzen, wie dies beispielsweise in der US 4,748,034 vorgeschlagen wird.

An die Hydrolyse schließt sich eine Wärmebehandlung an, die primär dazu dient, dass Enzym zu inaktivieren. Gleichzeitig werden aber auch nicht hydrolysierte Peptide denaturiert, was dazu führt, dass sie in einer folgenden Hydrolysestufe - die optional möglich ist - leichter dem Abbau zugänglich sind. Die Wärmebehandlung kann im gleichen Reaktionsgefäß erfolgen oder davon räumlich getrennt. Es hat sich beispielsweise erwiesen, dass in industriellen Wärmeaustauschern, die für die Durchführung sowohl der Hydrolyse als auch der Wärmebehandlung besonders nützlich sind, Temperaturen von etwa 80 bis etwa 100 °C und Verweilzeiten von etwa 2 bis etwa 10 min ausreichen, um die Denaturierung praktisch quantitativ zu bewirken.

### Entwässerung

Nach der Behandlung mit den proteolytischen Enzymen wird das wässrige Hydrolysat in ein trockenes Pulver überführt. Hierfür kommen Bandtrocknung, Gefriertrocknung und insbesondere Sprühtrockung in Frage. Die Pulver enthalten in der Regel eine Restfeuchte von 1 bis 5, vorzugsweise 2 bis 3 Gew.-%, in welchem das Fett in Form von Einschlüssen mehr oder weniger gleichmäßig in den fettfreien Trockensubstanzen, d.h. Proteinen, Zuckern und Salzen verteilt ist.

### Ablauf des Verfahrens

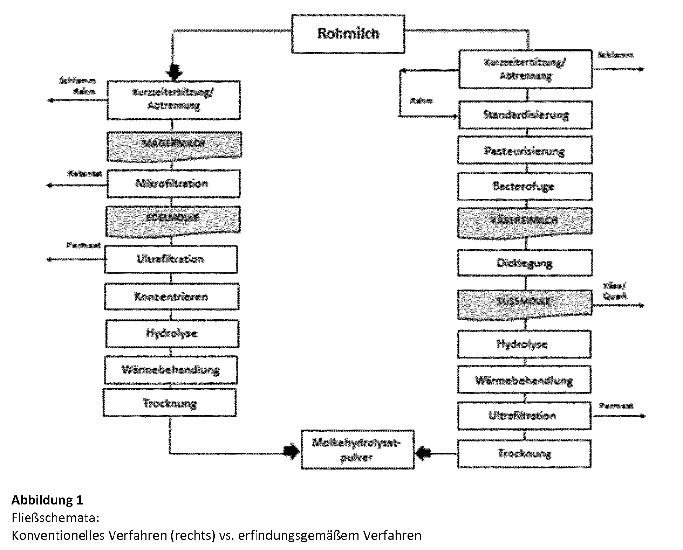

Die Erfindung wird im Folgenden durch die Abbildung 1 weiter erläutert, in dem der Verfahrensablauf als Fließschema wiedergegeben ist.

Im rechten Ast des Schemas ist die konventionelle Herstellung von Molkeproteinhydrolysat-Pulvern dargestellt. Dabei wird die Rohmilch zunächst einer Kurzzeiterhitzung unterworfen und dann im erwärmten Zustand in einem Separator vom Schlamm befreit. Gleichzeitig findet eine Entrahmung statt. Die resultierende Magermilch wird nun mit einer Menge Rahm auf einen definierten Fettgehalt eingestellt ("standardisiert") und anschließend pasteurisiert, d.h. für etwa 30 Sekunden auf 72 bis 74 °C erhitzt. Um die während den beiden Erhitzungsschritten gebildeten Sporen abzutrennen, folgt schließlich eine weitere mechanische Abtrennung in einer Bactofuge. Das Keimkonzentrat wird abgetrennt und die pasteurisierte Milch, die jetzt als Käserei- oder Kesselmilch bezeichnet wird, durch Zugabe von Lab dickgelegt. Nach dem Gerinnen wird der Käse oder Quark abgetrennt und die flüssige Phase, die als Süßmolke bezeichnet wird, weiterverarbeitet. Im ersten Schritt wird die Süßmolke mit einem proteolytischen Enzym versetzt und bei ca. 90 °C und pH = 6 über einen Zeitraum von etwa 10 Minuten hydrolysiert. Anschließend wird die Mischung einer Temperaturbehandlung unterworfen, bei der man die Temperatur für wenige Minuten bis auf 100 °C steigert, um das Enzym zu inaktivieren. Der Vorgang der Zugabe von Enzym, Hydrolyse und Wärmebehandlung kann mehrfach erfolgen. Anschließend wird das Produkt einer Ultrafiltration unterworfen und sprühgetrocknet. Die Ultrafiltration erfolgt vorzugsweise jedoch noch vor der Zugabe des Enzyms, um ein besseres Enzym-Substratverhältnis zu erhalten.

Im linken Ast der Abbildung ist das erfindungsgemäße Verfahren wiedergegeben. Die Rohmilch wird wie oben zunächst einer Kurzzeiterhitzung unterworfen und dann im erwärmten Zustand in einem Separator vom Schlamm befreit. Gleichzeitig findet eine Entrahmung statt. Die so erhaltene Magermilch wird zunächst einer Mikrofiltration unterworfen, um als Permeat eine Edelmolke zu erzeugen, die anschließend eine Ultrafiltration unterläuft. Das dabei anfallende Retentat wird dann wie oben geschildert - gegebenenfalls wiederholt - mit Enzymen versetzt, hydrolysiert, einer Wärmebehandlung unterworfen und schließlich sprühgetrocknet.

### Gewerbliche Anwendbarkeit

Ein weiterer Gegenstand der Erfindung betrifft die Verwendung von Edelmolke zur Herstellung von allergenfreien Nahrungsmittelzubereitungen wie insbesondere Babynahrung, im oben beschriebenen erfindungsgemäßen Verfahren.

## Patentansprüche

1. Allergenfreie Nahrungsmittelzubereitungen, dadurch erhältlich, dass man
(a) Rohmilch in an sich bekannter Weise erhitzt, von Feststoffen befreit und den Rahm abtrennt,
(b) die so erhaltene Magermilch einer Mikrofiltration unterwirft,
(c) die als erstes Permeat resultierende Edelmolke einer Ultrafiltration unterwirft,
(d) das resultierende zweite Retentat auf eine Trockenmasse von 30 bis 50 Gew.-% aufkonzentriert,
(e) das resultierende Molkenproteinkonzentrat mindestens einer Hydrolyse in Gegenwart mindestens eines proteolytischen Enzyms unterwirft,
(f) das resultierende Hydrolysat einer Wärmebehandlung unterwirft und schließlich
(g) das Endprodukt von Wasser befreit.

2. Verfahren zur Herstellung von allergenfreie Nahrungsmittelzubereitungen bei dem man
(a) Rohmilch in an sich bekannter Weise erhitzt, von Feststoffen befreit und den Rahm abtrennt,
(b) die so erhaltene Magermilch einer Mikrofiltration unterwirft,
(c) die als erstes Permeat resultierende Edelmolke einer Ultrafiltration unterwirft,
(d) das resultierende zweite Retentat auf eine Trockenmasse von 30 bis 50 Gew.-% aufkonzentriert,
(e) das resultierende Molkenproteinkonzentrat mindestens einer Hydrolyse in Gegenwart mindestens eines proteolytischen Enzyms unterwirft,
(f) das resultierende Hydrolysat einer Wärmebehandlung unterwirft und schließlich
(g) das Endprodukt von Wasser befreit.

3. Verfahren nach Anspruch 2, **dadurch gekennzeichnet, dass** man die Mikrofiltration der Magermilch mittels einer Membran durchführt, die einen Porendurchmesser von 0,1 bis 0,2 µm aufweist.

4. Verfahren nach den Ansprüchen 2 und/oder 3, **dadurch gekennzeichnet, dass** man die Ultrafiltration der Edelmolke bei 10 bis 55 °C durchführt.

5. Verfahren nach mindestens einem der Ansprüche 2 bis 4, **dadurch gekennzeichnet, dass** man die Ultrafiltration der Edelmolke mittels einer Membran durchführt, die einen Porendurchmesser von 1.000 bis 50.000 Dalton aufweist.

6. Verfahren nach Anspruch 5, **dadurch gekennzeichnet, dass** man Polymermembranen einsetzt.

7. Verfahren nach mindestens einem der Ansprüche 2 bis 6, **dadurch gekennzeichnet, dass** man die Hydrolyse mit proteolytischen Enzymen durchführt, die ausgewählt sind aus der Gruppe, die gebildet wird von Trypsin, Chymotrypsin, Pankreatin, Papain oder deren Gemischen.

8. Verfahren nach mindestens einem der Ansprüche 2 bis 7, **dadurch gekennzeichnet, dass** man die Hydrolyse bei Temperaturen von 50 bis 90 °C durchführt.

9. Verfahren nach mindestens einem der Ansprüche 2 bis 8, **dadurch gekennzeichnet, dass** man die Hydrolyse über einen Zeitraum von 10 Minuten bis 24 Stunden durchführt.

10. Verfahren nach mindestens einem der Ansprüche 2 bis 9, **dadurch gekennzeichnet, dass** man die Hydrolyse bei einem pH-Wert von 6 bis 8 durchführt.

11. Verfahren nach mindestens einem der Ansprüche 2 bis 10, **dadurch gekennzeichnet, dass** man die Wärmebehandlung bei einer Temperatur von 80 bis 100 °C durchführt.

12. Verfahren nach mindestens einem der Ansprüche 2 bis 11, **dadurch gekennzeichnet, dass** man die Wärmebehandlung über einen Zeitraum von 2 bis 10 Minuten durchführt.

13. Verfahren nach mindestens einem der Ansprüche 2 bis 12, **dadurch gekennzeichnet, dass** man die Zubereitungen durch Bandtrocknung, Gefriertrocknung oder Sprühtrocknung entwässert.

14. Verwendung von Edelmolke zur Herstellung allergenfreier Nahrungsmittelzubereitungen gemäß einem Verfahren nach mindestens einem der Ansprüche 2 - 13.

15. Verwendung von Edelmolke zur Herstellung allergenfreier Babynahrung gemäß einem Verfahren nach mindestens einem der Ansprüche 2 - 13.

## Claims

1. Allergen-free food compositions, obtainable by
(a) heating raw milk in a manner known *per se*, removing solids from it and skimming the cream,
(b) subjecting the skimmed milk such obtained to microfiltration,
(c) subjecting the fine whey obtained as a first permeate to ultrafiltration,
(d) evaporating the second retentate obtained to a dry mass of from 30 to 50 % by weight,
(e) subjecting the resulting whey protein concentrate to at least one hydrolysis step in the presence of at least one proteolytic enzyme,
(f) subjecting the resulting hydrolysate to heat treatment and, eventually,
(g) dehydrating the final product.

2. Process for the production of allergen-free food compositions, wherein
(a) raw milk is heated using a manner known *per se*, the solids are removed and the cream is skimmed,
(b) the skimmed milk such obtained is subjected to microfiltration,
(c) the fine whey obtained as a first permeate is subjected to ultrafiltration,
(d) the resulting second retentate is evaporated to a dry mass of from 30 to 50 % by weight,
(e) the resulting whey protein concentrate is subjected to at least one hydrolysis step in the presence of at least one proteolytic enzyme,
(f) the resulting hydrolysate is subjected to heat treatment and, eventually,
(g) the final product is dehydrated.

3. The process according to claim 2, **characterized in that** microfiltration of the skimmed milk is carried out by means of a membrane having a pore diameter of from 0.1 to 0.2 µm.

4. The process according to claims 2 and/or 3, **characterized in that** ultrafiltration of the fine whey is carried out at a temperature of from 10 to 55 °C.

5. The process according to at least one of claim 2 to 4, **characterized in that** ultrafiltration of the fine whey is carried out by means of a membrane having a pore diameter of from 1,000 to 50,000 Dalton.

6. The process according to claim 5, **characterized in that** polymer membranes are used.

7. The process according to at least one of claims 2 to 6, **characterized in that** hydrolysis is carried out using proteolytic enzymes, selected from the group consisting of trypsin, chymotrypsin, pankreatin, papain or mixtures thereof.

8. The process according to at least one of claims 2 to 7, **characterized in that** hydrolysis is carried out at temperatures of from 50 to 90 °C.

9. The process according to at least one of claims 2 to 8, **characterized in that** hydrolysis is performed over a period of time of from 10 minutes to 24 hours.

10. The process according to at least one of claims 2 to 9, **characterized in that** hydrolysis is carried out at a pH value of from 6 to 8.

11. The process according to at least one of claims 2 to 10, **characterized in that** heat treatment is carried out at a temperature of from 80 to 100 °C.

12. The process according to at least one of claims 2 to 11, **characterized in that** heat treatment is carried out over a period of from 2 to 10 minutes.

13. The process according to at least one of claims 2 to 12, **characterized in that** the compositions are dehydrated by belt drying, freeze drying or spray drying.

14. Use of fine whey for the production of allergen-free food compositions.

15. Use of fine whey for the production of allergen-free infant food.

## Revendications

1. Préparations alimentaires sans allergènes, pouvant être obtenues en ce que
(a) du lait brut est chauffé d'une manière connue, débarrassé des solides et séparé de la crème,
(b) le lait écrémé ainsi obtenu est soumis à une microfiltration,
(c) le lactosérum idéal résultant en tant que premier perméat est soumis à une ultrafiltration,
(d) le second rétentat résultant est concentré à une masse sèche de 30 à 50 % en poids,
(e) le concentré de protéines de lactosérum résultant est soumis à au moins une hydrolyse en présence d'au moins une enzyme protéolytique,
(f) l'hydrolysat résultat est soumis à un traitement thermique, et enfin
(g) le produit final est débarrassé de l'eau.

2. Procédé de fabrication de préparations alimentaires sans allergènes, selon lequel
(a) du lait brut est chauffé d'une manière connue, débarrassé des solides et séparé de la crème,
(b) le lait écrémé ainsi obtenu est soumis à une microfiltration,
(c) le lactosérum idéal résultant en tant que premier perméat est soumis à une ultrafiltration,
(d) le second rétentat résultant est concentré à une masse sèche de 30 à 50 % en poids,
(e) le concentré de protéines de lactosérum résultant est soumis à au moins une hydrolyse en présence d'au moins une enzyme protéolytique,
(f) l'hydrolysat résultat est soumis à un traitement thermique, et enfin
(g) le produit final est débarrassé de l'eau.

3. Procédé selon la revendication 2, **caractérisé en ce que** la microfiltration du lait écrémé est réalisée au moyen d'une membrane qui présente un diamètre de pores de 0,1 à 0,2 µm.

4. Procédé selon les revendications 2 et/ou 3, **caractérisé en ce que** l'ultrafiltration du lac-tosérum idéal est réalisée à une température de 10 à 55 °C.

5. Procédé selon au moins l'une quelconque des revendications 2 à 4, **caractérisé en ce que** l'ultrafiltration du lactosérum idéal est réalisée au moyen d'une membrane qui présente un diamètre de pores de 1 000 à 50 000 Daltons.

6. Procédé selon la revendication 5, **caractérisé en ce que** des membranes polymères sont utilisées.

7. Procédé selon au moins l'une quelconque des revendications 2 à 6, **caractérisé en ce que** l'hydrolyse est réalisée avec des enzymes protéolytiques qui sont choisies dans le groupe constitué par la trypsine, la chymotrypsine, la pancréatine, la papaïne ou leurs mélanges.

8. Procédé selon au moins l'une quelconque des revendications 2 à 7, **caractérisé en ce que** l'hydrolyse est réalisée à des températures de 50 à 90 °C.

9. Procédé selon au moins l'une quelconque des revendications 2 à 8, **caractérisé en ce que** l'hydrolyse est réalisée pendant une durée de 10 minutes à 24 heures.

10. Procédé selon au moins l'une quelconque des revendications 2 à 9, **caractérisé en ce que** l'hydrolyse est réalisée à un pH de 6 à 8.

11. Procédé selon au moins l'une quelconque des revendications 2 à 10, **caractérisé en ce que** le traitement thermique est réalisé à une température de 80 à 100 °C.

12. Procédé selon au moins l'une quelconque des revendications 2 à 11, **caractérisé en ce que** le traitement thermique est réalisé pendant une durée de 2 à 10 minutes.

13. Procédé selon au moins l'une quelconque des revendications 2 à 12, **caractérisé en ce que** les préparations sont déshydratées par séchage sur bande, lyophilisation ou séchage par pulvérisation.

14. Utilisation de lactosérum idéal pour la fabrication de préparations alimentaires sans allergènes par un procédé selon au moins l'une quelconque des revendications 2 à 13.

15. Utilisation de lactosérum idéal pour la fabrication d'aliments pour bébés sans allergènes par un procédé selon au moins l'une quelconque des revendications 2 à 13.
